# EUROPEAN PATENT APPLICATION

(11) **EP 4 783 676 A2**
(43) Date of publication of application: **29.07.2026**
(21) Application number: 26151748.6
(22) Date of filing: 14.01.2026
(51) Int. Cl.: H04W 48/10, H04W 76/19

(54) **METHOD AND COMMUNICATION DEVICE FOR HANDLING A RE-ESTABLISHMENT PROCEDURE**

(30) Priority: 22.01.2025 US 202563747900 P; 13.01.2026 US 202619446967
(71) Applicant: Acer Incorporated, New Taipei City 221 (TW)
(72) Inventor: Lin, Jung-Mao, 221 New Taipei City (TW)
(74) Representative: Straus, Alexander

(57) **Abstract**

A method for a communication device for handling a re-establishment procedure includes initiating the re-establishment procedure (302); selecting a target cell according to a cell selection procedure (304); and determining whether the target cell is a cell that the communication device is able to camp on according to a stored system information block 1, SIB1, in response to the target cell not providing an SIB1, after selecting the target cell according to the cell selection procedure (306).

## Description

### Field of the Invention

The present invention relates to methods and communication devices used in a wireless communication system, and more particularly, to methods and communication devices for handling a re-establishment procedure.

### Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - the 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

A communication device requires a system information block 1 (SIB1) provided by a cell to check whether the cell is a suitable cell for the communication device to perform a re-establishment procedure. In the absence of the SIB1, the communication equipment performs the OD-SIB1 procedure according to a wake up signal (WUS) configuration to request the SIB1 from the cell. However, the communication device may not successfully re-establish the connection to the cell, e.g., due to an invalid WUS configuration and/or a delay caused by the performance of the OD-SIB1 procedure. Thus, how to handle the re-establishment procedure is an important problem to be solved.

### Summary of the Invention

This in mind, the present invention aims at providing methods and communication devices for handling a re-establishment procedure to solve the abovementioned problem.

This is achieved by methods and communication devices for handling a re-establishment procedure according to the independent claims, respectively. The dependent claims pertain to corresponding further developments and improvements.

As will be seen more clearly from the detailed description following below, a claimed method for a communication device for handling a re-establishment procedure comprises: initiating the re-establishment procedure; selecting a target cell according to a cell selection procedure; and determining whether the target cell is a cell that the communication device is able to camp on according to a stored system information block 1 (SIB1) in response to the target cell not providing an SIB1, after selecting the target cell according to the cell selection procedure.

A claimed method of a serving cell for handling a re-establishment procedure comprises: transmitting a wake up signal (WUS) configuration set to a communication device; wherein the WUS configuration set comprises a plurality of identities (IDs) for a plurality of cells, a plurality of frequencies corresponding to the plurality of cells and a plurality of WUS configuration corresponding to the plurality of cells; wherein the plurality of cells comprise the serving cell and at least one neighbor cell of the serving cell.

A claimed method of a network energy saving (NES) cell for handling a re-establishment procedure comprises: receiving a re-establishment request message from a communication device in response to the communication device selecting the NES cell according to a cell selection procedure and determining the NES cell is a cell that the communication device is able to camp on according to a stored system information block 1 (SIB1).

### Brief Description of the Drawings

In the following, the invention is further illustrated by way of example, taking reference to the following drawings.
FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.
FIG. 5 is a flowchart of a process according to an example of the present invention.
FIG. 6 is a sequence diagram of a process according to an example of the present invention.
FIG. 7 is a sequence diagram of a process according to an example of the present invention.
FIG. 8 is a schematic diagram of a specific period for verifying whether a stored SIB1 is valid according to an example of the present invention.
FIG. 9 is a schematic diagram of a specific period for verifying whether a stored SIB1 is valid according to an example of the present invention.

### Detailed Description

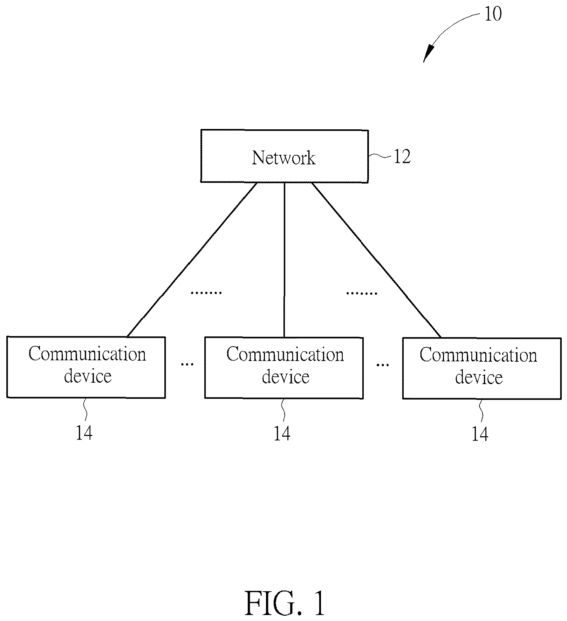

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the gNB or the 5G BS of network 12 may be a transmission reception point (TRP). In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

A communication device 14 may perform a layer 1 (L1) measurement to generate an L1 measurement result, and may change a serving cell according to the L1 measurement result. This procedure may be called as a conditional L1/L2 triggered mobility (C-LTM). The C-LTM may support an intra-gNB-distributed unit (intra-gNB-DU) mobility, an intra-gNB-central unit (intra-gNB-CU) mobility and/or an inter-gNB-DU mobility. The C-LTM may support an intra-frequency mobility and/or an inter-frequency mobility. The C-LTM may be supported for a licensed spectrum. The C-LTM may support at least one of following scenarios: a primary cell (PCell) change in a non-CA scenario or/and a non-dual connection (non-DC) scenario; a PCell and secondary cell (SCell) change in a CA scenario; a DC scenario. The communication device 14 may execute an L3 handover command transmitted by the network 12.

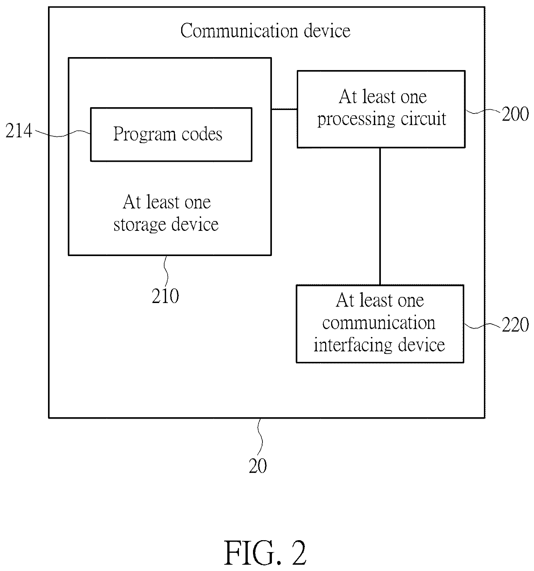

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

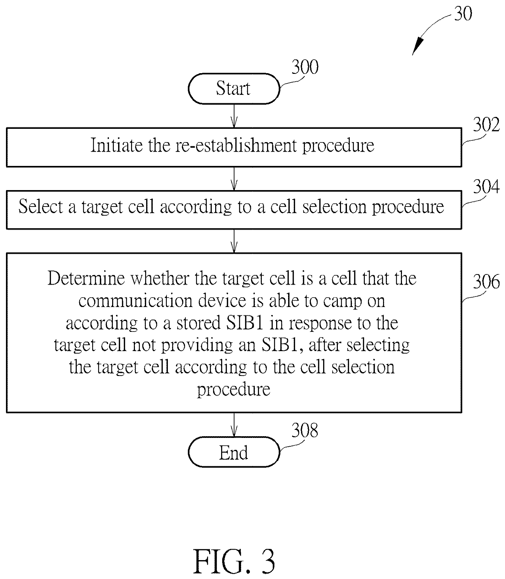

FIG. 3 is a flowchart of a process 30 according to an example of the present invention. The process 30 may be utilized in a communication device (e.g., a communication device 14 in FIG. 1 or the communication device 20 in FIG. 2), to handle a re-establishment procedure. The process 30 may be compiled into the program codes 214 and includes the following steps:

| | |
|---|---|
| Step 300: | Start. |
| Step 302: | Initiate the re-establishment procedure. |
| Step 304: | Select a target cell according to a cell selection procedure. |
| Step 306: | Determine whether the target cell is a cell that the communication device is able to camp on according to a stored system information block 1 (SIB1) in response to the target cell not providing an SIB1, after selecting the target cell according to the cell selection procedure. |
| Step 308: | End. |

According to the process 30, the communication device initiates the re-establishment procedure. Then, the communication device selects a target cell according to a cell selection procedure. The communication device determines (e.g., verifies) whether the target cell is a cell that the communication device is able to camp on according to (e.g., by) a stored SIB1 in response to the target cell not providing an SIB1, after selecting the target cell according to the cell selection procedure. That is, the communication device applies the stored SIB1 to perform the re-establishment procedure if the target cell does not provide the SIB1. The communication device does not need to perform an on-demand SIB1 (OD-SIB1) procedure to request the SIB1 from the target cell. Thus, a delay caused by the performance of the OD-SIB1 procedure can be overcome.

Realization of the process 30 is not limited to the above description. The following examples may be applied to realize the process 30.

In one example, the cell that the communication device is able to camp on is a highest-ranking cell based on a measurement. In one example, the stored SIB1 comprises at least one of the following information: public land mobile network (PLMN) information; availability and scheduling of other SIBs; and access control information. In one example, the PLMN information is used for determining whether the target cell is the cell that the communication device is able to camp on. In one example, the NES cell provides an on-demand SIB1 (OD-SIB 1) on demand (i.e., does not provide the OD-SIB1 periodically).

In one example, the step of selecting the target cell according to the cell selection procedure comprises at least one of: configuring the at least one candidate target cell with at least one candidate target cell configuration; performing the cell selection procedure to find a selected cell which satisfies a cell selection criteria; and determining the selected cell is the target cell in response to the selected cell being one of the at least one candidate target cell. In one example, the communication device configures the at least one candidate target cell with the at least one candidate target cell configuration, before performing (or initiating) the re-establishment procedure. In one example, the stored SIB1 is stored in the at least one candidate target cell configuration.

In one example, the communication device determines the stored SIB1 is (e.g., always) valid. In one example, the communication device initiates the re-establishment procedure according to a failure of a normal handover. In one example, the communication device initiates the re-establishment procedure according to a failure of a conditional handover. In one example, the communication device initiates the re-establishment procedure according to a failure of an LTM or a C-LTM. In one example, the communication device receives the stored SIB 1 in a handover command message from the target cell. In one example, the communication device receives the stored SIB1 in a radio resource control (RRC) message (e.g., condRRCReconfig or LTM-Candidate) from the target cell (or at least one candidate target cell).

In one example, the communication device determines the stored SIB1 is valid in response to a system frame number (SFN) of a current radio frame being in a first specific period (e.g., SIB1_ValidPeriod). In one example, the communication device determines the stored SIB1 is invalid in response to the SFN of the current radio frame being out of the first specific period. In one example, the communication device determines the stored SIB1 is invalid at an end of the first specific period.

In one example, the communication device determines the first specific period (e.g., a range of the first specific period). In one example, the step of determining the first specific period comprises at least one of the following steps: determining whether the communication device is configured with a first system information (SI) change indication, before initiating the re-establishment procedure; monitoring the first SI change indication during a third timer (e.g., T310) in response to the communication device without the first SI change indication; monitoring the first SI change indication at a beginning of each default paging cycle in response to the communication device without the first SI change indication; starting the first specific period when starting to monitor the first SI change indication; ending the first specific period at a boundary of a first modification period in response to receiving the first SI change indication from a serving cell of the communication device; and ending the first specific period at a boundary of a next first modification period in response to not receiving the first SI change indication. That is, the communication device determines the end of the first specific period by whether receiving the first SI change indication.

In one example, the communication device receives an SI change indicator in the first modification period from the serving cell. In one example, the boundary of the first modification period is an end of the first modification period. In one example, the boundary of the next first modification period is an end of the next first modification period. In one example, the next first modification period is a next period of the first modification period in which the communication device receives the SI change indicator from the serving cell. In one example, the first SI change indication is broadcasted (e.g., via a short message).

In one example, the communication device does not trigger the OD-SIB1 procedure in response to the stored SIB1 being valid. In one example, the communication device triggers the OD-SIB1 procedure according to a stored wake up signal (WUS) configuration to the target cell in response to the stored SIB1 being invalid.

In one example, the communication device verifies whether the stored WUS configuration is valid. In one example, the step of verifying whether the stored WUS configuration is valid comprises at least one of the following steps: determining the stored WUS configuration is valid in response to a SFN of a current radio frame being in a second specific period (e.g., WUS_ValidPeriod); and determining the stored WUS configuration is invalid at an end of the second specific period. In one example, the step of verifying whether the stored WUS configuration is valid comprises: determining the stored WUS configuration is invalid in response to the SFN of the current radio frame being out of the second specific period. In one example, the step of verifying whether the stored WUS configuration is valid comprises: determining the stored WUS configuration is invalid in response to initiating the re-establishment procedure.

In one example, the communication device determines the end of the second specific period. In one example, the step of determining the end of the second specific period comprises: receiving, from the serving cell, a second SI change indication being set in a second modification period; and ending the second specific period at a boundary of the second modification period. That is, the communication device determines the end of the second specific period by whether receiving the second SI change indication in the second modification period. In one example, the second SI change indication is broadcasted (e.g., via a short message). In one example, the boundary of the second modification period is an end of the second modification period. In one example, the boundary of the second modification period is defined by at least one SFN value. In one example, the SFN value is divisible by a number of radio frames (RFs) comprising the second modification period. In one example, the number of RFs is a product of a modification period coefficient and a default paging cycle. In one example, the modification period coefficient is 2, 4, 8 or 16, but not be limited herein. In one example, the communication device ends the second specific period at a boundary of a next second modification period in response to the second SI change indication not being set. In one example, the boundary of the next second modification period is an end of the next second modification period. In one example, the communication device ends the second specific period at the boundary of the second modification period in response to the second SI change indication being set.

In one example, the communication device checks whether the second SI change indication is set or not, to determine a range of the second specific period. In one example, the communication device monitors the second SI change indication when the third timer (e.g., T310) is running, if a radio link failure (RLF) condition occurs. In one example, the communication device monitors the second SI change indication at a beginning of each modification period.

In one example, the first SI change indication and the second SI change indication may be the same or different. In one example, the first specific period and the second specific period may be the same or different. In one example, the first modification period and the second modification period may be the same or different. In one example, the next first modification period and the next second modification period may be the same or different.

In one example, the OD-SIB1 procedure comprises at least one of the following steps: starting a monitoring window; monitoring (e.g., receiving) an OD-SIB1 request acknowledgement (ACK) (e.g., a random access response (RAR) or a Medium Access Control (MAC) control element (CE)) in the monitoring window; and stopping the monitoring window in response to receiving the OD-SIB1 request ACK from the target cell. That is, the communication device performs the OD-SIB1 procedure to request the target cell to provide the OD-SIB1.

In one example, the step of monitoring the OD-SIB1 request ACK in the monitoring window comprises: determining (e.g., releasing) the stored WUS configuration in response to the monitoring window expiring. In one example, the step of monitoring the OD-SIB1 request ACK in the monitoring window comprises at least one of the following steps: retransmitting the OD-SIB1 request to the target cell in response to the monitoring window expiring; increasing a value of a counter by 1 in response to retransmitting the OD-SIB1 request to the target cell; and determining the target cell is a barring cell (e.g., a cell that the communication device is not able to camp on) in response to the value of the counter being greater than a threshold (e.g., ReEst-preambleTransMax). That is, the communication device retransmits the OD-SIB1 request to the target cell, if the communication device does not receive the OD-SIB1 request ACK from the target cell. In one example, the communication device determines (e.g., declares) a failure of the OD-SIB1 procedure in response to the value of the counter being greater than the threshold. In one example, the threshold may be 0, 1, 2, 3, 4, 5, 6, 7, 8, 10, 20, 50, 100 or 200, but not limited herein. In one example, the value of the counter represents a retry number for the communication device to perform the OD-SIB1 procedure.

In one example, the communication device starts a first timer (e.g., T310) in response to finding a radio link problem. In one example, the communication device stops the first timer in response to solving the radio link problem. In one example, the communication device declares an RLF in response to the first timer expiring. In one example, the communication device initiates the re-establishment procedure in response to declaring the RLF.

In one example, the communication device enters an idle mode from a connected mode in response to a failure of the re-establishment procedure. In one example, the communication device recovers a connection (e.g., from the serving cell to the target cell) in response to the re-establishment procedure being successful.

In one example, the communication device starts a second timer (e.g., T311) in response to initiating the re-establishment procedure. In one example, the communication device stops the second timer in response to the re-establishment procedure being done (e.g., the communication device camping on the target cell successfully). In one example, the communication device determines (e.g., declares) the failure of the re-establishment procedure in response to the second timer expiring.

In one example, the communication device transmits a re-establishment request message (e.g., Msg3) to the target cell in response to the target cell being the cell that the communication device is able to camp on. In one example, the communication device receives a re-establishment message (e.g., Msg4) from the target cell, after transmitting the re-establishment request message to the target cell. In one example, the communication device camps on the target cell (e.g., reestablishes a connection to the target cell) according to the re-establishment message.

In one example, the communication device receives the WUS configuration set from the serving cell. In one example, the WUS configuration set is received via an SIB. In one example, the communication device stores the WUS configuration set, after receiving the WUS configuration set. In one example, the WUS configuration set comprises a plurality of identities (IDs) for a plurality of cells, a plurality of frequencies (e.g., respectively) corresponding to the plurality of cells and a plurality of WUS configuration (e.g., respectively) corresponding to the plurality of cells. In one example, the plurality of cells comprises the at least one candidate target cell. In one example, the plurality of WUS configurations comprises the at least one candidate WUS configuration.

In one example, the WUS configuration set further comprises a plurality of indications (e.g., respectively) corresponding to the plurality of WUS configurations. In one example, each of the plurality of indications indicates whether a corresponding WUS configuration is supported by the communication device in the connected mode. In one example, the communication device receives a cell list from the serving cell. In one example, the cell list indicates which WUS configuration in the WUS configuration set is supported by the communication device in the connected mode.

In one example, the communication device determines the target cell is not the cell that the communication device is able to camp on in response to the target cell not supporting an

OD-SIB1 procedure. In one example, the communication device adds a condition that "the target cell supports the OD-SIB1 procedure" into at least one triggering OD-SIB1 procedure condition in response to the target cell not supporting the OD-SIB1 procedure.

In one example, the WUS configuration set further comprises a plurality of thresholds (e.g., ReEst-preambleTransMax) (e.g., respectively) corresponding to the plurality of WUS configurations. In one example, each of the plurality of thresholds indicates a maximum of retry number for the communication device in the connected mode to perform the OD-SIB1 procedure according to a corresponding WUS configuration. In one example, the communication device determines the target cell is the cell that the communication device is able to camp on in response to the retry number not exceeding a corresponding threshold of the plurality of thresholds. In one example, the communication device determines (e.g., releases) the WUS configuration set in response to the retry number exceeding the corresponding threshold of the plurality of thresholds.

In one example, the communication device determines (e.g., releases) the WUS configuration set in response to initiating the re-establishment procedure.

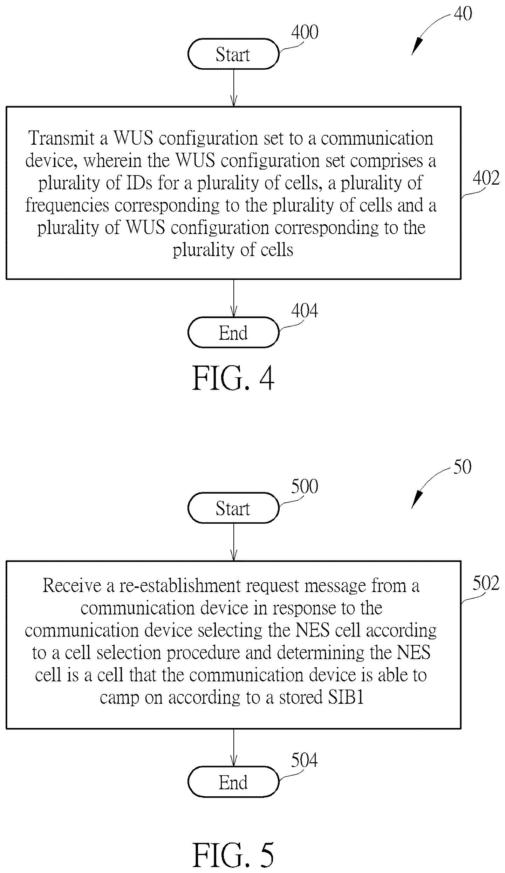

FIG. 4 is a flowchart of a process 40 according to an example of the present invention. The process 40 may be utilized in a serving cell (or a serving BS) (e.g., a cell of the network 12 in FIG. 1, the communication device 20 in FIG. 2, or the serving cell in the examples of the process 30), to handle a re-establishment procedure. The process 40 may be compiled into the program codes 214 and includes the following steps:

| | |
|---|---|
| Step 400: | Start. |
| Step 402: | Transmit a WUS configuration set to a communication device, wherein the WUS configuration set comprises a plurality of IDs for a plurality of cells, a plurality of frequencies corresponding to the plurality of cells and a plurality of WUS configuration corresponding to the plurality of cells. |
| Step 404: | End. |

According to the process 40, the serving cell transmits a WUS configuration set to a communication device (e.g., the communication device in the process 30). The WUS configuration set comprises a plurality of IDs for a plurality of cells, a plurality of frequencies (e.g., respectively) corresponding to the plurality of cells and a plurality of WUS configuration (e.g., respectively) corresponding to the plurality of cells.

Realization of the process 40 is not limited to the above description. The following examples may be applied to realize the process 40.

In one example, the plurality of cells comprises the serving cell. In one example, the plurality of cells comprises at least one neighbor cell of the serving cell.

In one example, the WUS configuration set is transmitted via an SIB. In one example, the WUS configuration set further comprises a plurality of indications (e.g., respectively) corresponding to the plurality of WUS configurations. In one example, each of the plurality of indications indicates whether a corresponding WUS configuration is supported by the communication device in a connected mode.

In one example, the serving cell transmits a cell list to the communication device. In one example, the cell list indicates which WUS configuration in the WUS configuration set is supported by the communication device in a connected mode.

In one example, the WUS configuration set further comprises a plurality of thresholds (e.g., respectively) corresponding to the plurality of WUS configurations. In one example, each of the plurality of thresholds indicates a maximum of retry number for the communication device in a connected mode to perform an OD-SIB1 procedure according to a corresponding WUS configuration.

The examples of the process 30 may be applied to the process 40, and are not narrated herein for brevity.

FIG. 5 is a flowchart of a process 50 according to an example of the present invention. The process 50 may be utilized in a NES cell (or a NES BS) (e.g., a NES cell of the network 12 in FIG. 1, the communication device 20 in FIG. 2, or the target cell in the process 30), to handle a re-establishment procedure. The process 50 may be compiled into the program codes 214 and includes the following steps:

| | |
|---|---|
| Step 500: | Start. |
| Step 502: | Receive a re-establishment request message from a communication device in |
| Step 504: End. | response to the communication device selecting the NES cell according to a cell selection procedure and determining the NES cell is a cell that the communication device is able to camp on according to a stored SIB1. |

According to the process 50, the NES cell receives a re-establishment request message (e.g., Msg3) from a communication device in response to the communication device selecting the NES cell according to a cell selection procedure and determining (e.g., verifying) the NES cell is a cell that the communication device is able to camp on according to (e.g., by) a stored SIB1. That is, the NES cell does not need to provide the SIB1 to the communication device because the communication device applies the stored SIB1 to perform the re-establishment procedure. Thus, the OD-SIB1 procedure does not be performed, and a delay caused by the performance of the OD-SIB1 procedure can be overcome.

In one example, the cell that the communication device is able to camp on is a highest-ranking cell based on a measurement. In one example, the stored SIB1 is stored in at least one candidate target cell configuration. In one example, the stored SIB1 comprises at least one of the following information: public land mobile network (PLMN) information; availability and scheduling of other SIBs; and access control information. In one example, the PLMN information is used for determining whether the target cell is the cell that the communication device is able to camp on.

In one example, the stored SIB1 is (e.g., always) valid. In one example, the stored SIB1 is valid (or is determined to be valid) in response to an SFN of a current radio frame being in a specific period (e.g., the first specific period in the examples of the process 30). In one example, the stored SIB1 is invalid (or is determined to be invalid) in response to the SFN of the current radio frame being out of the specific period. In one example, the stored SIB 1 is invalid at an end of the specific period.

In one example, the NES cell transmits a re-establishment message (e.g., Msg4) to the communication device in response to the re-establishment request message.

The examples of the processes 30-40 may be applied to the process 50, and are not narrated herein for brevity.

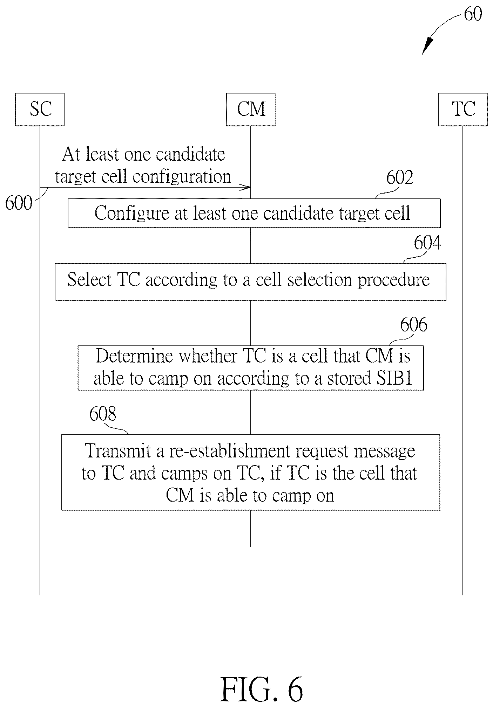

FIG. 6 is a sequence diagram of a process 60 according to an example of the present invention. There are a communication device CM, a serving cell SC of the communication device CM and a target cell TC of the communication device CM in FIG. 6. The communication device CM is in an idle mode or an inactive mode. In Step 600, the serving cell SC transmits at least one candidate target cell configuration of at least one candidate target cell to the communication device CM. The at least one candidate target cell configuration comprises a stored SIB1. In Step 602, the communication device CM configures the at least one candidate target cell. In Step 604, the communication device CM selects the target cell TC according to a cell selection procedure. The target cell TC is one of the at least one candidate target cell. In Step 606, the communication device CM determines whether the target cell TC is a cell that the communication device CM is able to camp on according to the stored SIB1. In Step 608, the communication device CM transmits a re-establishment request message to the target cell TC and camps on the target cell TC, if the target cell TC is the cell that the communication device CM is able to camp on.

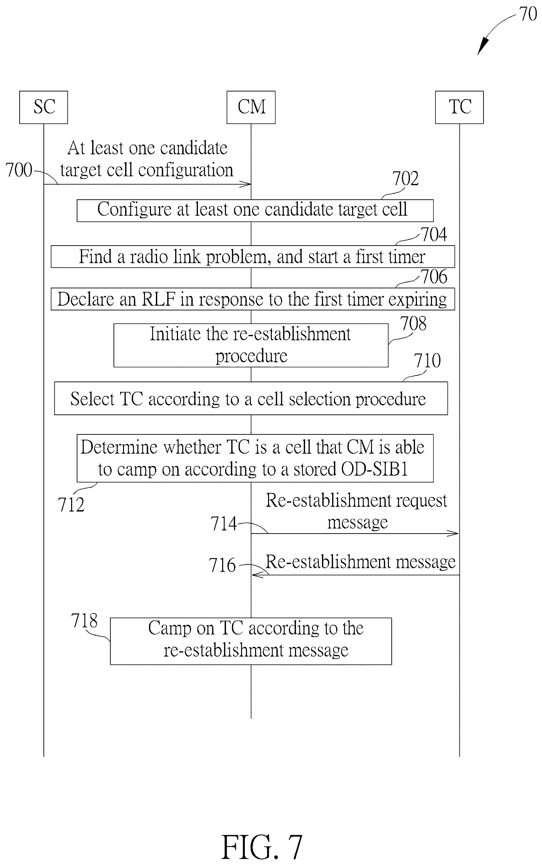

FIG. 7 is a sequence diagram of a process 70 according to an example of the present invention. There are a communication device CM, a serving cell SC of the communication device CM and a target cell TC of the communication device CM in FIG. 7. The communication device CM is in a connected mode. In Step 700, the serving cell SC transmits at least one candidate target cell configuration of at least one candidate target cell to the communication device CM. The at least one candidate target cell configuration comprises a stored SIB1. In Step 702, the communication device CM configures the at least one candidate target cell. In Step 704, the communication device CM finds a radio link problem, and starts a first timer. In Step 706, the communication device CM declares an RLF in response to the first timer expiring. In Step 708, the communication device CM initiates the re-establishment procedure. In Step 710, the communication device CM selects the target cell TC according to a cell selection procedure. The target cell TC is one of the at least one candidate target cell. In Step 712, the communication device CM determines whether the target cell TC is a cell that the communication device CM is able to camp on according to the OD-SIB1. In Step 714, the communication device CM transmits a re-establishment request message to the target cell TC in response to the target cell TC being the cell that the communication device CM is able to camp on. In Step 716, the target cell TC transmits a re-establishment message to the communication device CM in response to the re-establishment request message. In Step 718, the communication device CM camps on the target cell TC according to the re-establishment message.

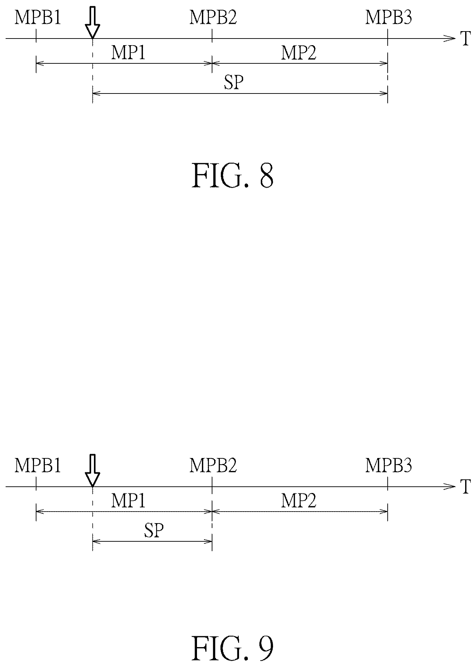

FIG. 8 is a schematic diagram of a specific period SP for verifying whether a stored SIB1 is valid according to an example of the present invention. There is a time domain axis T in FIG. 8, and there are two modification periods MP1-MP2 and three boundaries MPB1-MPB3 of modification periods on the time domain axis T. The boundary MPB1 is a beginning of the modification period MP1. The boundary MPB2 is an end of the modification period MP1, and a beginning of the modification period MP2. The boundary MPB3 is an end of the modification period MP2. An arrow within the modification period MP1 represents a time instant for the communication device to start to monitor an SI change indication from a serving cell. The time instant is a beginning of the specific period SP. Since the communication device does not receive the SI change indication, the communication device ends the specific period SP at the boundary MPB3. Thus, the communication device determines the stored SIB1 is valid in response to an SFN of a current radio frame being in the specific period SP. The communication device determines the stored SIB1 is invalid at an end of the specific period SP.

FIG. 9 is a schematic diagram of a specific period SP for verifying whether a stored SIB1 is valid according to an example of the present invention. There is a time domain axis T in FIG. 9, and there are two modification periods MP1-MP2 and three boundaries MPB1-MPB3 of modification periods on the time domain axis T. The boundary MPB1 is a beginning of the modification period MP1. The boundary MPB2 is an end of the modification period MP1, and a beginning of the modification period MP2. The boundary MPB3 is an end of the modification period MP2. An arrow within the modification period MP1 represents a time instant for the communication device to start to monitor an SI change indication from a serving cell. The time instant is a beginning of the specific period SP. Since the communication device receives the SI change indication, the communication device ends the specific period SP at the boundary MPB2. Thus, the communication device determines the stored SIB1 is valid in response to an SFN of a current radio frame being in the specific period SP. The communication device determines the stored SIB1 is invalid at an end of the specific period SP.

The terms of "first", "second" and "third" described above are used to distinguish the relevant statements, and do not limit the order of the relevant statements. The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if" or "since" described above may be replaced by "in response to". The term of "WUS configuration" described above may be replaced by the term of "random access (RA) procedure configuration".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and communication devices for handling a re-establishment procedure. The communication device applies the stored SIB 1 to perform the re-establishment procedure, and does not need to perform the OD-SIB1 procedure to request the SIB1 from the target cell. Thus, the problem of handling the re-establishment procedure can be solved.

## Claims

1. A method of a communication device (14, 20) for handling a re-establishment procedure, **characterized by**:
initiating the re-establishment procedure (302);
selecting a target cell according to a cell selection procedure (304); and
determining whether the target cell is a cell that the communication device is able to camp on according to a stored system information block 1, SIB1, in response to the target cell not providing an SIB1, after selecting the target cell according to the cell selection procedure (306).

2. The method of claim 1, **characterized in that** the step of selecting the target cell according to the cell selection procedure comprises at least one of:
configuring at least one candidate target cell with at least one candidate target cell configuration;
performing the cell selection procedure to find a selected cell which satisfies a cell selection criteria; and
determining the selected cell is the target cell in response to the selected cell being one of the at least one candidate target cell.

3. The method of claim 2, **characterized in that** the communication device configures the at least one candidate target cell with the at least one candidate target cell configuration, before performing the re-establishment procedure.

4. The method of claim 1, **characterized in that** the stored SIB1 is stored in the at least one candidate target cell configuration.

5. The method of claim 1, further **characterized by:**
determining the stored SIB1 is valid.

6. The method of claim 1, further **characterized by:**
determining the stored SIB1 is valid in response to a system frame number, SFN, of a current radio frame being in a specific period; and
determining the stored SIB 1 is invalid in response to the SFN of the current radio frame being out of the specific period.

7. A method of a serving cell (20) for handling a re-establishment procedure, **characterized by:**
transmitting a wake up signal, WUS, configuration set to a communication device (14, 20) (402);
wherein the WUS configuration set comprises a plurality of identities, IDs, for a plurality of cells, a plurality of frequencies corresponding to the plurality of cells and a plurality of WUS configuration corresponding to the plurality of cells;
wherein the plurality of cells comprise the serving cell and at least one neighbor cell of the serving cell.

8. The method of claim 7, **characterized in that** at least one of the following limitations is satisfied:
the WUS configuration set further comprises a plurality of indications corresponding to the plurality of WUS configurations; and
each of the plurality of indications indicates whether a corresponding WUS configuration is supported by the communication device in a connected mode.

9. The method of claim 7, further **characterized by:**
transmitting a cell list to the communication device;
wherein the cell list indicates which WUS configuration in the WUS configuration set is supported by the communication device in a connected mode.

10. The method of claim 7, **characterized in that** at least one of the following limitations is satisfied:
the WUS configuration set further comprises a plurality of thresholds corresponding to the plurality of WUS configurations; and
each of the plurality of thresholds indicates a maximum of retry numbers for the communication device in a connected mode to perform an on-demand system information block 1, OD-SIB1, procedure according to a corresponding WUS configuration.

11. A method of a network energy saving, NES, cell (20) for handling a re-establishment procedure, **characterized by:**
receiving a re-establishment request message from a communication device (14, 20) in response to the communication device selecting the NES cell according to a cell selection procedure and determining the NES cell is a cell that the communication device is able to camp on according to a stored system information block 1, SIB1 (502).

12. The method of claim 11, **characterized in that** the stored SIB1 is stored in at least one candidate target cell configuration.

13. The method of claim 11, **characterized in that** the stored SIB1 is valid.

14. The method of claim 11, **characterized in that** the stored SIB1 is valid in response to a system frame number, SFN, of a current radio frame being in a specific period.

15. The method of claim 11, **characterized in that** the stored SIB1 is invalid in response to an SFN of a current radio frame being out of the specific period.
